# FASCICULE DE BREVET EUROPEEN

(11) **EP 3 408 920 B1**
(45) Date de publication et mention de la délivrance du brevet: **22.04.2020**
(21) Numéro de dépôt: 17702908.9
(22) Date de dépôt: 10.01.2017
(51) Int. Cl.: H02J 7/14, B60R 16/033

(54) **DISPOSITIF DE GESTION DE TRANSFERT D'ÉNERGIE AVEC CONTRÔLE ACTIF DES PERTURBATIONS ÉLECTROMAGNÉTIQUES**
ENERGIEÜBERTRAGUNGSSTEUERUNGSVORRICHTUNG MIT AKTIVER STEUERUNG VON ELEKTROMAGNETISCHER INTERFERENZ
ENERGY TRANSFER CONTROL DEVICE WITH ACTIVE CONTROL OF ELECTROMAGNETIC INTERFERENCE

(30) Priorité: 29.01.2016 FR 1650715
(43) Date de publication de la demande: 05.12.2018
(73) Titulaire: PSA Automobiles SA, 78300 Poissy (FR)
(72) Inventeur: COMTE, Raphael, 27650 Mesnil sur L Estree (FR); BOUCLY, Bernard, 78150 Le Chesnay (FR)
(74) Mandataire: Jeannin, Laurent Jean-Pierre
(86) Numéro de dépôt international: PCT/FR2017/050053
(87) Numéro de publication internationale: WO 2017/129877

(56) Documents cités:
- WO-A1-2016/051104
- WO-A2-2012/104264

## Description

L'invention concerne les dispositifs de gestion de transfert d'énergie, en particulier, les dispositifs aptes à limiter la tension ou le courant lors du transfert d'énergie.

On connaît par la demande de brevet FR3026903, qui n'est pas un état de la technique au sens de l'article 54(2) CBE, un dispositif de gestion de transfert d'énergie comportant une première borne destinée à être reliée à une masse électrique, une deuxième borne destinée à être reliée à un premier stockeur d'énergie électrique, une troisième borne destinée à être reliée à au moins un consommateur électrique, une quatrième borne destinée à être reliée à un deuxième stockeur d'énergie électrique. Ce dispositif comprend un premier ensemble d'interrupteurs et un deuxième ensemble d'interrupteurs et un superviseur. Le superviseur est apte à piloter le premier ensemble d'interrupteurs et le deuxième ensemble d'interrupteurs avec un signal en modulation de largeur d'impulsion.

Le pilotage du deuxième interrupteur permet une limitation de courant transitant depuis la quatrième borne vers la deuxième borne (par exemple pour alimenter une machine électrique branchée sur la deuxième borne) pour respecter les contraintes en tension du réseau de bord. Cette limitation est monodirectionnelle. En limitant le courant sortant par la deuxième borne, on peut garantir une tension minimale aux équipements reliés à la troisième borne.

Le pilotage du troisième interrupteur élémentaire permet une limitation de courant transitant depuis la deuxième borne vers la quatrième borne (par exemple pour recharger le deuxième stockeur à partir de l'ensemble comprenant le premier stockeur et l'alternateur) tout en gardant une tension respectant les contraintes en tension du réseau de bord. Cette limitation est monodirectionnelle. Cette maîtrise du courant de recharge du stockeur garantit un niveau de tension conforme aux critères de qualité du réseau de bord.

Cette solution a pour inconvénient de générer des perturbations électromagnétique au niveau du réseau de bord relié à la troisième borne. Pour limiter ce phénomène, on peut avoir recours à un filtre dédié comprenant des condensateurs pour les filtrer les ondulations de tensions. Mais ce type de filtre peut être relativement couteux.

Le document WO2012104264 divulgue un appareil de gestion de puissance électrique destiné à un véhicule motorisé comprenant : un dispositif de stockage de puissance primaire destiné à alimenter un dispositif de démarreur de moteur; une charge électrique de véhicule; un dispositif de stockage de puissance secondaire destiné à alimenter la charge électrique de véhicule; et une partie diode primaire à semi-conducteurs couplée entre le dispositif de stockage de puissance primaire et la charge électrique de véhicule, la partie diode primaire servant à permettre un écoulement de courant vers l'avant par elle-même depuis le dispositif de stockage de puissance primaire jusqu'à la charge électrique de véhicule lorsque le dispositif de démarreur n'est pas en cours d'utilisation et à empêcher un écoulement de courant dans le sens inverse par elle-même depuis le dispositif de stockage de puissance secondaire jusqu'au dispositif de démarreur de moteur lorsque le démarreur est en cours d'utilisation.

L'invention a donc pour but de remédier au problème précité en proposant un dispositif de gestion de transfert de l'énergie, peu couteux et capable de limiter les variations de tensions au niveau d'une borne (destinée à être raccordé des consommateurs électriques) et, en particulier des variations de tensions se produisant à l'ouverture d'interrupteur lorsque celui-ci est piloté par une signal en modulation de largeur d'impulsion .

Elle propose plus précisément à cet effet un dispositif de gestion de transfert d'énergie comportant une première borne destinée à être reliée à une masse électrique, une deuxième borne destinée à être reliée à un premier stockeur et à un producteur d'énergie, une troisième borne destinée à être reliée à au moins un consommateur électrique, une quatrième borne destinée à être reliée à un deuxième stockeur d'énergie électrique, ledit dispositif comprenant en outre un premier ensemble d'interrupteurs couplé d'une part à la deuxième borne et d'autre part à la troisième borne, un deuxième ensemble d'interrupteurs couplé d'une part à la quatrième borne et d'autre part à la troisième borne, le premier ensemble d'interrupteurs comportant une première diode dont la cathode est reliée à la troisième borne et un deuxième interrupteur élémentaire monté en parallèle de la première diode, le deuxième ensemble d'interrupteurs comportant une deuxième diode dont la cathode est reliée à la troisième borne, une première diode de roue libre dont l'anode est reliée à la première borne et dont la cathode est couplée à l'anode de la deuxième diode, caractérisé en ce que le premier ensemble d'interrupteurs comporte en outre :
- une troisième diode dont l'anode est reliée à l'anode de la première diode, et
- un interrupteur élémentaire, dit quatrième interrupteur élémentaire, monté en parallèle de la troisième diode.

L'ajout du quatrième interrupteur élémentaire, piloté de façon synchronisé avec le deuxième ensemble d'interrupteurs, permet de limiter fortement les variations de tensions au niveau de la troisième borne.

En effet, lorsque le deuxième ensemble d'interrupteurs est piloté avec un signal en modulation de largeur d'impulsion et, en particulier, lors des phases d'ouverture du (ou des) interrupteur(s), le module de pilotage commande le quatrième interrupteur élémentaire en mode linéaire.

Le troisième interrupteur élémentaire est adapté pour être piloté par un signal en modulation de largeur d'impulsions, lesdits deuxième interrupteur élémentaire et quatrième interrupteur élémentaire étant à au moins trois états, dont au moins un état intermédiaire partiellement passant, un état ouvert et un état fermé, et étant adaptés pour être pilotés par un signal en modulation de largeur d'impulsions, il comporte en outre un superviseur apte à délivrer :
- un signal modulé au troisième interrupteur élémentaire de façon à limiter le courant transitant par ledit troisième interrupteur élémentaire, et
- un signal modulé au deuxième interrupteur élémentaire et au quatrième interrupteur élémentaire de façon à contrôler le placement desdits interrupteurs élémentaires dans un état intermédiaire de sorte à limiter des variations de tensions, au niveau de la troisième borne, lorsque le troisième interrupteur élémentaire est piloté par un signal modulé.

De façon avantageuse, lors d'un transfert d'énergie de la deuxième borne vers la quatrième borne, le signal modulé commande le deuxième interrupteur élémentaire et le quatrième interrupteur élémentaire de sorte que :
- le deuxième interrupteur élémentaire et le quatrième interrupteur élémentaire sont dans l'état intermédiaire, si la tension au niveau de la troisième borne est supérieure à un seuil prédéterminé lorsque le troisième interrupteur élémentaire est dans un état ouvert au cours du pilotage par le signal modulé, le deuxième interrupteur élémentaire et le quatrième interrupteur élémentaire étant dans l'état fermé si la tension au niveau de la troisième borne est inférieure au seuil prédéterminé et
- le deuxième interrupteur élémentaire et le quatrième interrupteur élémentaire sont dans un état fermé lorsque le troisième interrupteur élémentaire est dans un état fermé.

De façon avantageuse, le dispositif de gestion de transfert d'énergie selon l'invention comporte en outre une deuxième diode de roue libre dont l'anode est reliée à la première borne et la cathode est reliée à l'anode de la première diode ou à la cathode de la troisième diode, le superviseur étant, en outre, apte à délivrer un signal modulé au deuxième interrupteur élémentaire de façon à limiter le courant transitant par ledit deuxième interrupteur élémentaire, lors d'un transfert d'énergie de la quatrième borne vers la troisième borne.

De façon avantageuse, le deuxième ensemble d'interrupteurs comporte en outre :
- une quatrième diode dont l'anode est reliée à l'anode de la deuxième diode,
- un cinquième interrupteur élémentaire, monté en parallèle de la quatrième diode.

De façon avantageuse, les troisième interrupteur élémentaire et cinquième interrupteur élémentaire étant à au moins trois états, dont au moins un état intermédiaire partiellement passant, un état passant et un état non passant, le superviseur étant, en outre, apte à délivrer un signal modulé de sorte que :
- le courant transitant par ledit deuxième interrupteur élémentaire est limité,
- le troisième interrupteur élémentaire et le cinquième interrupteur élémentaire sont dans l'état intermédiaire si la tension au niveau de la troisième borne est supérieure à un seuil prédéterminée lorsque le premier interrupteur élémentaire est dans un état ouvert au cours du pilotage par le signal modulé, le troisième interrupteur élémentaire et le cinquième interrupteur élémentaire étant dans l'état fermé si la tension au niveau de la troisième borne est inférieure au seuil prédéterminé et
- le troisième interrupteur élémentaire et le cinquième interrupteur élémentaire sont dans un état fermé lorsque le premier interrupteur élémentaire est dans un état fermé.

De façon avantageuse, la cathode de la première diode de roue libre est reliée à l'anode de la deuxième diode ou à la cathode de la quatrième diode.

L'invention concerne aussi un système électrique d'un véhicule comportant un producteur d'énergie un premier stockeur d'énergie, un deuxième stockeur d'énergie et un réseau de bord principal comportant au moins un consommateur électrique caractérisé en ce qu'il comporte en outre un dispositif de gestion de transfert d'énergie selon l'invention, la deuxième borne étant reliée au premier stockeur et au producteur d'énergie, la troisième borne étant reliée au réseau de bord, la quatrième borne étant reliée au deuxième stockeur, la première borne étant relié à une masse électrique du véhicule.

L'invention concerne aussi un véhicule comportant un dispositif de gestion de transfert d'énergie selon l'invention ou un système électrique selon l'invention.

D'autres caractéristiques et avantages de l'invention apparaîtront à l'examen de la description détaillée ci-après, et des dessins annexés, sur lesquels:
- la figure 1 illustre un exemple de système électrique selon l'invention ;
- la figure 2 illustre une deuxième variante de réalisation du dispositif de transfert d'énergie selon l'invention ;
- la figure 3 illustre une troisième variante de réalisation du dispositif de transfert d'énergie selon l'invention ;
- la figure 4 illustre une quatrième variante de réalisation du dispositif de transfert d'énergie selon l'invention ;
- la figure 5 illustre une cinquième variante de réalisation du dispositif de transfert d'énergie selon l'invention ;
- la figure 6 illustre une sixième variante de réalisation du dispositif de transfert d'énergie selon l'invention ;
- la figure 7 illustre une septième variante de réalisation du dispositif de transfert d'énergie selon l'invention ;
- la figure 8 illustre une huitième variante de réalisation du dispositif de transfert d'énergie selon l'invention ;
- la figure 9 illustre schématiquement un diagramme d'évolution de la résistance d'un ensemble d'interrupteurs en fonction de sa commande de tension ;
- la figure 10 illustre un diagramme d'évolution temporelle d'une commande de fonctionnement d'un interrupteur élémentaire.

Les dessins annexés pourront non seulement servir à compléter l'invention, mais aussi contribuer à sa définition, le cas échéant.

Dans ce qui suit, on considère à titre d'exemple non limitatif que le système électrique présenté est embarqué à bord d'un véhicule comportant un moteur thermique comportant un réseau de bord comprenant des consommateurs.

Mais l'invention n'est pas limitée à ce mode de réalisation. En effet, elle concerne tout système électrique et électronique comportant au moins deux stockeurs d'énergie et un consommateur.

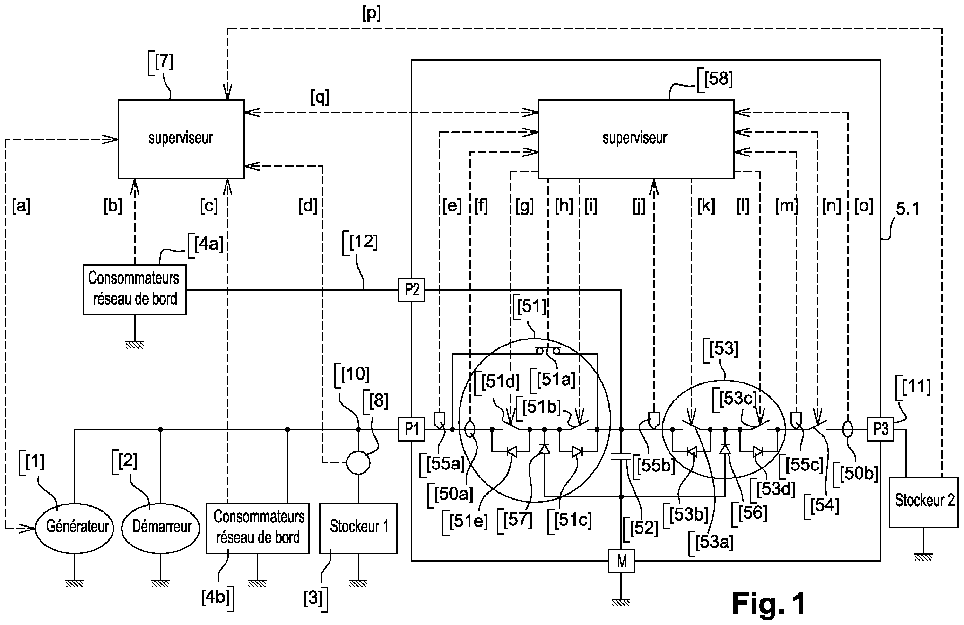

En référence à la figure 1, le système électrique selon l'invention comporte les éléments suivants : un producteur d'énergie électrique 1 (par exemple, un alternateur), un démarreur 2, un premier stockeur d'énergie électrique 3, le dispositif de gestion de transfert d'énergie électrique 5, un réseau de bord principal 4a d'un véhicule et éventuellement un réseau de bord secondaire 4b, et un deuxième stockeur d'énergie 6.

Le dispositif de gestion de transfert d'énergie électrique 5 comporte quatre bornes : d'une part, une première borne M, qui est une borne négative connectée à une masse du véhicule, et d'autre part, une deuxième borne P1, une troisième borne P2 et une quatrième borne P3 qui sont des bornes positives.

Le producteur d'énergie électrique 1 est relié électriquement d'un côté à la deuxième borne P1 du dispositif 5, avec un faisceau électrique (résistif et inductif), et de l'autre côté à la masse. L'alternateur 2 est aussi relié électriquement d'un côté à la deuxième borne P1 du dispositif 5, avec un faisceau électrique (résistif et inductif), et de l'autre côté à la masse. Le réseau de bord secondaire 4b est aussi relié électriquement d'un côté à la deuxième borne P1 du dispositif 5, avec un faisceau électrique (résistif et inductif), et de l'autre côté à la masse. Le premier stockeur d'énergie électrique 3 est aussi relié électriquement d'un côté à la deuxième borne P1 du dispositif 5.1 et de l'autre côté à la masse.

Le réseau de bord principal 4a est relié électriquement d'un côté à la troisième borne P2 du dispositif 5.1 avec au moins un faisceau et de l'autre côté à la masse.

Le deuxième stockeur 6 est relié électriquement d'un côté à la quatrième borne P3 du dispositif 5.1 et de l'autre côté à la masse avec des faisceaux.

L'alternateur 1 (ou alterno-démarreur) est utilisé pour la fourniture de puissance électrique au réseau de bord 4a, 4b du véhicule, pour les redémarrages du moteur thermique et pour les phases dite de BOOST. Lors d'une phase de BOOST, l'alternateur est utilisé pour une fournir du couple au moteur thermique en phase de roulage. En phase de BOOST, l'alternateur devient donc consommateur de courant.

Le démarreur 2 est utilisé pour les premiers démarrages du véhicule et éventuellement, selon la configuration du véhicule, pour les redémarrages du véhicule.

Le premier stockeur d'énergie électrique 3, par exemple de type batterie plomb 12V, est utilisé notamment pour le démarrage et le redémarrage, pour l'alimentation des consommateurs du réseau de bord principal 4a et secondaire 4b pendant les phases de veille du véhicule.

Le véhicule comporte aussi un capteur 8 collectant des données relatives au premier stockeur 3 : le courant du premier stockeur 3, la tension du premier stockeur 3, la température du premier stockeur 3, une estimation de l'état de charge du premier stockeur 3. De façon alternative, si le premier stockeur 3 est instrumenté (mesure de courant et de tension), il est possible d'exploiter ces informations, sans avoir recourt au capteur 8.

Le réseau de bord principal 4a inclut des éléments électriques du véhicule tels que des calculateurs et des équipements électriques, par exemple, des équipements de confort, les organes sécuritaires ainsi que les autres équipements électriques n'entrant pas dans les catégories précédemment citées.

De façon optionnelle, le véhicule comporte un réseau de bord secondaire 4b comportant uniquement des consommateurs (ou organes) qui ne sont pas perturbés pendant les phases de démarrage, de redémarrage et de BOOST.

Le deuxième stockeur 6 (ou stockeur secondaire), par exemple une batterie lithium-ion, est utilisé pour alimenter le réseau de bord principal 4a pendant l'usage du véhicule (hors veille).

Le véhicule comporte aussi un superviseur 7 apte à collecter et transmettre des données du véhicule.

Le véhicule comporte aussi des éléments de distribution électrique 10, 11, 12. Ces éléments de distribution électrique 10, 11, 12 sont par exemple des faisceaux ayant des caractéristiques inductives et résistives. Les faisceaux contribuent au bon fonctionnement du système grâce à leur caractéristique résistive et inductive.

Comme expliqué précédemment, le dispositif 5.1 comporte quatre bornes :
- la première borne M, borne négative connectée à une masse du véhicule,
- la deuxième borne P1, borne positive connectée au premier stockeur 3, au démarreur 2 et à l'alternateur 1 et au réseau de bord secondaire 4b ;
- la troisième borne P2, borne positive connectée au réseau de bord principal 4a ;
- la quatrième borne P3, borne positive connectée au deuxième stockeur 6.

Le dispositif 5.1 comporte deux ensembles d'interrupteurs 51,53, aussi appelé interrupteurs de puissance, (par exemple de type MOSFET, acronyme anglais de Metal Oxide Semiconductor Field Effect Transistor - qui se traduit par transistor à effet de champ à structure métal-oxyde-semiconducteur) :
Le premier ensemble d'interrupteurs 51 comporte un premier interrupteur élémentaire 51a, un deuxième interrupteur élémentaire 51b et une première diode 51c, une troisième diode 51e et un interrupteur élémentaire 51d, dit quatrième interrupteur élémentaire.

Il peut y avoir plusieurs deuxièmes interrupteurs élémentaires 51b et diodes 51c montés en parallèles. Dans ce cas, les deuxièmes interrupteurs élémentaires 51b sont commandés simultanément.

Il peut aussi y avoir plusieurs quatrièmes interrupteurs élémentaires 51d et troisième diodes 51e montés en parallèles. Dans ce cas, les quatrièmes interrupteurs élémentaires 51d sont commandés simultanément.

La première diode 51c est mise en place pour la sûreté de fonctionnement. La diode est en redondance des interrupteurs élémentaires en cas de défaillance en circuit ouvert.

Le premier interrupteur élémentaire (par exemple un interrupteur de type électromécanique) 51a est normalement fermé. Il est utilisé pour alimenter le véhicule pendant une phase parking du véhicule (veille du véhicule).

Le deuxième interrupteur élémentaire 51b fonctionne :
- en ON (fermeture): Dans ce mode de pilotage, il n'y a pas de limitation du courant quel que soit le sens du courant ;
- en OFF (ouverture): pas de passage de courant dans le premier ensemble d'interrupteurs 51 dans le sens du deuxième stockeur 6 vers le premier stockeur 3 lorsque le premier interrupteur élémentaire 51a ouvert.
- en PWM (commande piloté / mode automatique) dans le sens deuxième stockeur 6 vers premier stockeur 3 de façon à limiter la décharge du deuxième stockeur 6 vers le premier stockeur 3. Cette limitation est obtenue à partir d'une consigne de courant et/ou de tension à respecter Dans le mode PWM, il n'y a pas de limitation de courant dans le sens stockeur 3 vers l'ensemble stockeur 6 et réseau de bord 4a, nous sommes dans un fonctionnement similaire au mode ON puisque le courant est inférieur à la consigne de courant,
- Filtrage actif : Fonctionnement en PWM combiné à un mode linéaire (voir explication ci-après) en association avec le quatrième interrupteur élémentaire 51d lorsque le troisième interrupteur 53a est piloté en PWM avec un passage du courant dans le sens premier stockeur 3 vers deuxième stockeur 6.

Le deuxième interrupteur élémentaire 51b est pilotable en tension dans le transfert d'énergie électrique (à partir de consigne de tension et de courant pour la construction du signal PWM). Tant que le courant, la tension et la puissance sont dans un gabarit défini par des valeurs de limitation, il n'y a pas d'écrêtage en tension, de limitation du courant ou de limitation de la puissance et le deuxième interrupteur élémentaire 51b se comporte comme un interrupteur fermé. Si le courant, la tension ou la puissance est au-delà du gabarit défini, il y a un écrêtage en tension, ou une limitation en courant ou une limitation de la puissance et le deuxième interrupteur élémentaire 51b se comporte comme un hâcheur monodirectionnel. La stratégie de régulation que l'on met en place permet d'avoir une régulation en tension et en courant dans le transfert d'énergie électrique

Le pilotage de 51b permet une mise en place d'une limitation de courant dans le sens du deuxième stockeur 6 vers l'ensemble comprenant le premier stockeur 3 et l'alterno-démarreur 1 sous contrainte de tension du réseau de bord principal 4a (de façon à maintenir un tension minimale dans le réseau de bord principal 4a). Cette limitation de courant est utilisée pour contribuer à la fonction BOOST et fournir du courant à l'alterno-démarreur 1 qui contribue alors à fournir de couple au moteur thermique en phase de roulage véhicule.

Le pilotage de 51b ne permet pas de limitation du courant dans le sens du premier stockeur 3 vers le deuxième stockeur 6 notamment à cause de la première diode.

Le deuxième interrupteur 51b peut être piloté :
- de façon manuelle, à partir d'une consigne de courant de décharge (de 0 à Imax);
- de façon automatique, sous autorisation : dès que la tension du premier stockeur 3 passe sous un seuil de tension prédéterminé, le superviseur autorise de la décharge du deuxième stockeur 6 vers l'ensemble comprenant le premier stockeur 3 et l'alterno-démarreur 1 sous la contrainte d'une consigne de courant maximal Imax de décharge et avec le respect d'une tension minimale du réseau de bord principal 4a.

Le quatrième interrupteur élémentaire 51d fonctionne :
- en ON (fermeture manuelle), lorsque le deuxième interrupteur 51b est piloté pour transférer de l'énergie depuis la quatrième borne P3 vers la troisième borne P2.
- en PWM en mode linéaire pour réaliser un filtre actif lorsque le troisième interrupteur 53a est en mode PWM avec un passage du courant dans le sens premier stockeur 3 vers deuxième stockeur 6.

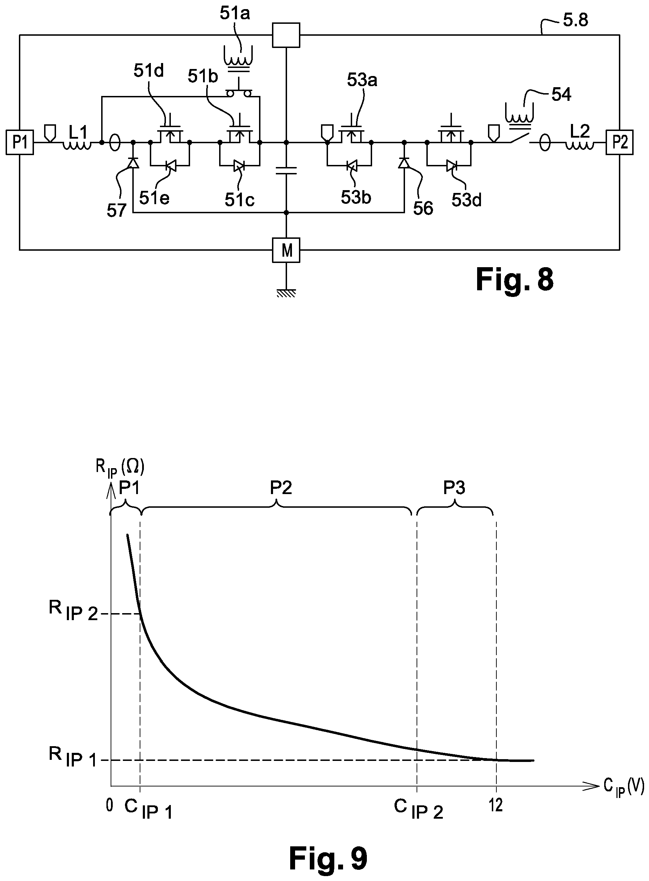

Par exemple, le quatrième interrupteur élémentaire 51d peut être un composant électronique de puissance de type MOSFET, et dont l'état (ouvert ou partiellement ouvert ou fermé) dépend d'une commande de tension C_{IP}, par exemple égale à 0,5 V. On a schématiquement illustré sur la figure 9 un diagramme d'exemple non limitatif d'évolution de la résistance R_{IP} d'un interrupteur principal IP de type MOSFET en fonction de sa commande de tension C_{IP}. La référence C_{IP 1} représente la commande de tension minimale d'un interrupteur principal IP (elle est ici égale à 4 V). La référence C_{IP 2} représente la commande de tension maximale d'un interrupteur principal IP (elle est ici égale à 10 V). La référence RI_{P 1} représente la résistance d'un interrupteur principal IP lorsque sa commande de tension C_{IP} est égale à C_{IP 2}. La référence R_{IP 2} représente la résistance d'un interrupteur principal IP lorsque sa commande de tension C_{IP} est égale à C_{IP 1}. La référence P1 représente la zone de commande de tension C_{IP} dans laquelle l'interrupteur principal IP est dans son état ouvert (ou non passant). La référence P2 représente la zone de commande de tension C_{IP} dans laquelle l'interrupteur principal IP est dans ses états intermédiaires (partiellement passants). Dans cette zone de commande de tension C_{IP} P2 on peut faire fonctionner l'interrupteur principal IP dans un mode dit « linéaire » afin de faire varier sa résistance de façon sensiblement linéaire. La référence P3 représente la zone de commande de tension C_{IP} dans laquelle l'interrupteur principal IP est dans son état fermé (ou passant).

Pour résumé, lorsque la limitation en courant pour la recharge du deuxième stockeur 6 est active (autrement dit, le troisième interrupteur 53a est piloté en PWM), les deuxième 51b et quatrièmes 51d interrupteurs sont également pilotés en PWM combiné avec un pilotage en mode linéaire. Ils peuvent être pilotés de manières synchrones ou asynchrones

Le deuxième ensemble d'interrupteurs 53 comporte un troisième interrupteur 53a, une deuxième diode 53b, une quatrième diode 53d et un cinquième interrupteur élémentaire 53c.

Il peut y en avoir plusieurs interrupteurs principaux 53 en parallèle. Les troisièmes interrupteurs élémentaires 53a sont alors commandés simultanément.

Il peut aussi y avoir plusieurs cinquièmes interrupteurs élémentaires 53c et quatrièmes diodes 53d montés en parallèles. Dans ce cas, les cinquièmes interrupteurs élémentaires 53c sont commandés simultanément.

Le troisième interrupteur 53a fonctionne :
- en ON (fermeture) : Dans ce sens, il n'y a pas de limitation du courant quel que soit le sens du courant ;
- en PWM (commande piloté / mode automatique) dans le sens de l'ensemble comprenant le premier stockeur 3 et le générateur 1 vers le deuxième stockeur 6, de façon à limiter la recharge du premier stockeur 6. Cette limitation est obtenue à partir d'une consigne de courant et/ou de tension à respecter. Dans le mode PWM, il n'y a pas de limitation de courant dans le sens stockeur 6 vers l'ensemble stockeur 3/réseau de bord secondaire 4b et réseau de bord principal 4a, nous sommes dans un fonctionnement similaire au mode ON puisque le courant est inférieur à la consigne de courant
- Filtrage actif : Fonctionnement en PWM combiné à un mode linéaire (voir explication ci-après) en association avec le cinquième interrupteur élémentaire 53c lorsque le deuxième interrupteur 51b est piloté en PWM avec un passage du courant dans le sens deuxième stockeur 6 vers le premier stockeur 3.

Le troisième interrupteur 53a est pilotable en tension dans le transfert d'énergie électrique (à partir de consigne en tension et en courant pour la construction du PWM). Tant que le courant, la tension et la puissance sont dans un gabarit défini par des valeurs de limitation, il n'y a pas d'écrêtage en tension, de limitation du courant ou de limitation de la puissance et le troisième interrupteur 53a se comporte comme un interrupteur fermé. Si le courant, la tension ou la puissance est au-delà du gabarit défini, il y a un écrêtage en tension, ou une limitation en courant ou une limitation de la puissance et le troisième interrupteur 53a se comporte comme un hâcheur monodirectionnel. La stratégie de régulation que l'on met en place permet d'avoir une régulation en tension et en courant.

Le pilotage du troisième interrupteur 53a permet la mise en place d'une limitation de courant dans le sens de l'ensemble comprenant le premier stockeur 3 le démarreur 1 et l'alternateur 2 vers le deuxième stockeur 6 sous contraintes :
- D'une consigne en courant de recharge maximal du deuxième stockeur 6 ;
- D'une tension réseau de bord principal 4a minimale à garantir ;
- D'une tension maximale admissible du deuxième stockeur 6 ;
- D'une consigne de prélèvement maximal de courant sur l'alternateur.

Le pilotage du troisième interrupteur 53a ne permet pas de limitation du courant dans le sens du deuxième stockeur 6 vers l'ensemble comprenant le premier stockeur 3 le démarreur 1 et l'alternateur 2.

Le cinquième interrupteur élémentaire 53c fonctionne :
- en ON (fermeture manuelle), lorsque le dispositif 5.1 est piloté pour transférer de l'énergie depuis la quatrième borne P3 vers la troisième borne P2 (dans le sens deuxième stockeur 6 vers réseau de bord 4a) ou pour transférer de l'énergie depuis la deuxième borne P1 vers la quatrième borne P3 (dans le sens premier stockeur 3 vers deuxième stockeur 6).
- en PWM combiné à un mode linéaire pour réaliser un filtre actif lorsque le deuxième interrupteur 51b est en mode PWM avec un passage du courant dans le sens deuxième stockeur 6 vers le premier stockeur 3.

En résumé, le deuxième interrupteur élémentaire 51b et le troisième interrupteur élémentaire 53a se comporte chacun comme un hacheur monodirectionnel. En revanche, le dispositif 5, au global, se comporte comme un abaisseur bidirectionnel.

Le dispositif selon l'invention 5.1 comporte aussi un interrupteur électromécanique 54 normalement ouvert permettant une isolation du deuxième stockeur 6 par exemple en cas d'atteinte des conditions aux limites du deuxième stockeur 6 (durabilité du stockeur) Il est également ouvert lorsque le véhicule est en veille : la batterie lithium n'est pas utilisée pendant la veille du véhicule ou d'une défaillance de l'ensemble d'interrupteurs 53 à l'état fermé (toujours passant).

Le dispositif 5.1 permet, en pilotant les interrupteurs principaux 51, 53, d'alimenter les consommateurs du réseau de bord 4a et 4b avec différentes sources d'énergie :
- Soit à partir de l'alternateur 1 avec une consigne de tension pouvant varier de 13 à 16V ;
- Soit à partir de l'ensemble premier stockeur 3, alternateur 1 par une gestion des interrupteurs principaux 51, 53.
- Soit à partir du deuxième stockeur 6 par une gestion des interrupteurs principaux 51, 53.

Le dispositif selon l'invention comporte aussi deux mesures de courant 50a, 50b :
- Une première mesure de courant 50a mesurant le courant passant par le deuxième interrupteur élémentaire 51b, la première diode 51c, le quatrième interrupteur élémentaire 51d et la troisième diode 51e (le courant passant par le premier interrupteur élémentaire 51a n'est pas mesuré par la première de courant 50a) et qui est utilisée notamment pour la mesure de courant de recharge du premier stockeur 3 par le deuxième stockeur 6 ou pour l'aide au démarrage/ redémarrage par une fourniture de courant limité du deuxième stockeur 6 pour l'alternateur 1 ou le démarreur 2.
- Une deuxième mesure de courant 50b mesurant la recharge du deuxième stockeur 6.

L'invention comporte aussi trois mesures de tensions 55a, 55b, 55c.

La première mesure de tension 55a mesure la tension du premier stockeur 3 entre la deuxième borne P1 et la première borne M.

La deuxième mesure de tension 55b mesure la tension du réseau de bord principal 4a entre la troisième borne P2 et la deuxième borne M.

La troisième mesure de tension 55c mesure la différence de potentiel entre, d'une part, le premier ensemble d'interrupteurs 53 et l'interrupteur électromécanique 54 (potentiel positif) et, d'autre part, la borne M (potentiel négatif).

Le dispositif selon l'invention 5.1 comporte aussi deux diodes de roue libre 56, 57.

La première diode de roue libre 56 est indispensable lors du fonctionnement en PWM du troisième interrupteur 53a, sinon la tension devient trop élevée, en raison des effets inductifs.

La deuxième diode de roue libre 57 est indispensable lors du fonctionnement en PWM du deuxième interrupteur 51b, sinon la tension devient trop élevée. Sans diode, les surtensions peuvent détruire les interrupteurs

Le dispositif selon l'invention 5.1 comporte aussi un superviseur 58. Le superviseur 58 est configuré pour générer un signal de pilotage C1, C2, correspondant au mode de fonctionnement déterminé, pour le deuxième interrupteur élémentaire 51b et le troisième interrupteur élémentaire 53a. Ces signaux de pilotage permettent d'ouvrir et de fermer les interrupteurs 51b, 53a afin de réguler les valeurs de la tension et du courant associées au transfert d'énergie lorsqu'une limitation du courant et/ou de la tension est nécessaire.

Les différents éléments de l'architecture de la figure 1 communiquent de la façon suivante.

L'alternateur 1 communique [a] avec le superviseur véhicule 7. L'alternateur 1 envoie au superviseur véhicule 7 des données alternateur avec par exemple la charge de l'alternateur. Le superviseur véhicule 7 envoie vers l'alternateur 1 des consignes de pilotage de l'alternateur.

Le réseau de bord principal 4a envoie [b] au superviseur véhicule 7 des informations concernant l'état des consommateurs électriques présents sur le réseau de bord principal 4a. Plus précisément, ce sont certains constituants (des consommateurs) du réseau de bord principal 4a qui envoient des informations au superviseur 7. Cette information permet au superviseur véhicule 7 de déterminer une plage de fonctionnement nominale en tension du réseau de bord principal 4a en définissant une tension minimale (Umin) et une tension maximale (Umax) à garantir.

Le réseau de bord secondaire 4b envoie [c] au superviseur véhicule 7 des informations concernant l'état des consommateurs électriques présents sur le réseau de bord secondaire 4b. Plus précisément, ce sont certains constituants (des consommateurs) du réseau de bord secondaire 4b qui envoient des informations au superviseur 7. Cette information permet au superviseur véhicule 7 de déterminer une plage de fonctionnement nominale en tension du réseau de bord secondaire 4b en définissant une tension minimale (Umin) et une tension maximale (Umax) à garantir.

Le premier stockeur communique [d] au superviseur véhicule 7 des informations concernant le premier stockeur 3, a minima : la température du premier stockeur, le courant du premier stockeur, la tension du premier stockeur, estimation de l'état de charge du premier stockeur.

Le superviseur du dispositif 5.1 reçoit [e] la première mesure de tension 55a entre P1 et M. Cette mesure représente la tension du premier stockeur 3 (c'est une image à la chute de tension prêt).

Le superviseur 58 du dispositif 5.1 reçoit [f] la première mesure de courant 50a dans le sens réseau de bord principale 4a vers premier stockeur 3 sur la deuxième borne P1 du dispositif 5.

Le superviseur 58 du dispositif 5.1 pilote [g] le quatrième interrupteur élémentaire 51d, comme expliqué précédemment soit en pilotage de type ON, OFF, soit en pilotage en commutation (PWM) combiné à un mode linéaire pour réaliser un filtre actif.

Le superviseur 58 du dispositif 5.1 pilote [h] le premier interrupteur élémentaire 51a.

Le superviseur 58 du dispositif 5.1 pilote aussi [i] le deuxième interrupteur élémentaire 51b. Il s'agit d'un pilotage de type ON (autrement dit, en mode passant bidirectionnel), OFF (autrement dit, bloqué dans le sens réseau de bord secondaire 4b vers réseau de bord principal 4a, ou en commutation (PWM) en mode limitation de courant dans le sens du deuxième stockeur 6 vers le premier stockeur 3 et passant dans le sens stockeur 3 vers réseau de bord 4a, ou en commutation (PWM) combiné à un mode linéaire, conjointement avec le quatrième interrupteur élémentaire 51d, pour réaliser un filtre actif.

Le superviseur 58 du dispositif 5.1 reçoit [j] la deuxième mesure de tension entre P2 et M. Cette mesure représente la tension du réseau de bord principal 4a.

Le superviseur 58 du dispositif 5.1 pilote [k] le troisième interrupteur élémentaire 53a. Il s'agit d'un pilotage de type ON (autrement dit, passant quel que soit le sens du courant et la valeur du courant), OFF ou en commutation (PWM) en mode limitation de courant de recharge du deuxième stockeur 6 dans le sens alternateur 1 vers deuxième stockeur 6, ou en commutation (PWM) combiné à un mode linéaire, conjointement avec le cinquième interrupteur élémentaire 53c, pour réaliser un filtre actif.

Le superviseur 58 du dispositif 5.1 pilote aussi [l] le cinquième interrupteur élémentaire 53c, comme expliqué précédemment soit en pilotage de type ON, OFF, soit en pilotage en commutation (PWM) combiné à un mode linéaire pour réaliser un filtre actif.

Le superviseur 58 du dispositif 5.1 pilote aussi [n] l'interrupteur électromécanique 54.

Le superviseur 58 du dispositif 5.1 reçoit [o] la deuxième mesure de courant 50b du deuxième stockeur 6.

Le superviseur 58 du dispositif 5.1 reçoit [m] la troisième mesure de tension 55c Cette mesure représente la tension entre le cinquième interrupteur 53c et l'interrupteur électromécanique 54, d'une part, et le point de masse M, d'autre part.

Le superviseur véhicule 7 et le superviseur 58 du dispositif 5.1 échangent [p] des informations
Le superviseur véhicule 7 [q] reçoit des données du deuxième stockeur 6 (par exemple, température, courant, tension, état de charge, ...).

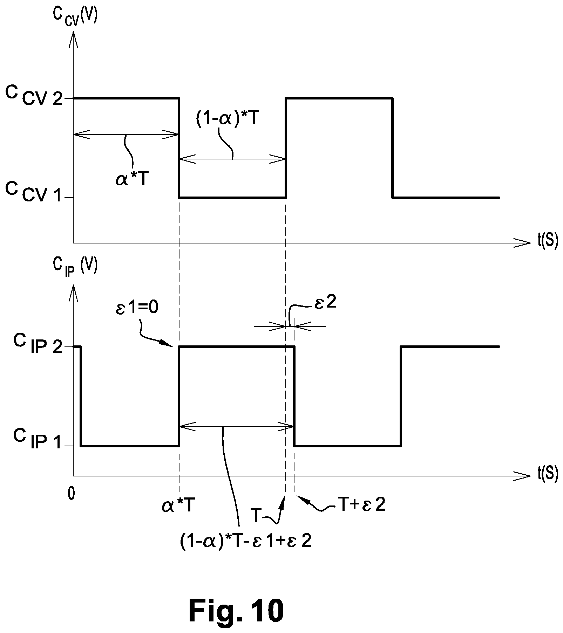

On a schématiquement illustré sur la figure 10, dans la partie supérieure, un premier diagramme d'évolution temporelle de la commande de fonctionnement C_{CV} (ici une commande de tension) du troisième interrupteur élémentaire (53a). La référence T représente la période de commutation (ou de découpage) qui est l'inverse de la fréquence de découpage du troisième interrupteur élémentaire (53a). Comme illustré, pendant une période T, le troisième interrupteur élémentaire 53a est placé pendant α^{∗}T dans un état fermé (ou « ON ») par la commande de fonctionnement C_{CV 2} (dite « à 1 »), puis placé pendant (1-α)^{∗}T dans un état ouvert (ou « OFF ») par la commande de fonctionnement C_{CV 1} (dite à 0). La référence a représente le rapport cyclique entre la durée du placement dans l'état ouvert et la durée du placement dans l'état fermé. On notera que le rapport cyclique a peut être fixe ou variable selon le type de la régulation effectuée à l'aide du troisième interrupteur élémentaire (53a).

Lorsque le découpage (ou la commutation) est de type dit « à modulation de largeur d'impulsion » (ou PWM (pour « Puise Width Modulation »)), la commande de fonctionnement à 0 est notée « PWM=0 » et la commande de fonctionnement à 1 est notée « PWM=1 ». On notera que lorsque la commande de fonctionnement est à 1 (PWM=1), le dispositif 5.1 de gestion de transfert d'énergie prélève de la puissance depuis la deuxième borne (P1), et donc il y a du courant qui passe dans le deuxième interrupteur élémentaire 51b et dans le quatrième interrupteur élémentaire 51d en vue d'alimenter la troisième borne P2 (reliée au réseau de bord) et la quatrième borne P3 (reliée au deuxième stockeur).

La consigne U_{RA1 lim} de limitation de tension aux bornes du premier réseau de consommation RA1 est une information qui peut être fournie par le superviseur 58.

On notera également que lorsque le deuxième interrupteur élémentaire 51b et/ou dans le quatrième interrupteur élémentaire 51d a plusieurs états intermédiaires (comme c'est le cas de ceux de type MOSFET (voir figure 9)), le superviseur 58 peut être avantageusement agencé pour contrôler les placements de l'un au moins des deuxième 51b ou quatrième 51d interrupteurs élémentaires dans des états successifs qui sont fonction d'une loi prédéfinie. Cette loi prédéfinie est propre à induire une diminution de la tension V2 à la borne troisième borne P2 (reliée au réseau de bord) tant que la mesure de tension V2 à la borne troisième borne P2 est supérieure à la consigne U_{RA1 lim} de limitation de tension.

Par exemple, cette loi prédéfinie peut être non linéaire. Mais dans une variante de réalisation cette loi prédéfinie pourrait être linéaire.

Pendant le contrôle selon la loi prédéfinie (par exemple non linéaire), la commande de fonctionnement C_{IP} de chacun des deuxième 51b et quatrième 51d interrupteurs élémentaires varie entre C_{IP 1} et C_{IP 2}, de façon à induire une chute de la tension V2 à la troisième borne P2 sous ou au niveau de la consigne U_{RA1 lim} de limitation de tension.

On notera que le superviseur 58 peut être agencé pour contrôler les placements des deuxième 51b et quatrième 51d interrupteurs élémentaires de façon sensiblement synchronisée ou bien de façon désynchronisée.

On peut noter que le superviseur est aussi apte à piloter le deuxième ensemble d'interrupteur 53 comme filtre actif lorsque l'interrupteur 51 est piloté pour limiter la tension.

On notera également que le superviseur 58 peut être agencé pour débuter le contrôle selon la loi prédéfinie avec un premier décalage temporel prédéfini ε1 après la réception d'une première mesure de tension V2 à la troisième borne P2 supérieure à la consigne URA1 lim de limitation de tension à la troisième borne P2. Cette option est destinée à retarder de ε1 le démarrage du contrôle selon la loi prédéfinie, afin d'éviter des perturbations. Physiquement cette valeur mesurée V2 sera différente de 0, car elle est liée à la chaîne d'acquisition et de traitement. Dans ce cas, le démarrage du contrôle selon la loi prédéfinie commence au plus tard à l'instant t = α.T + ε1. Le premier décalage temporel prédéfini ε1 n'intervient qu'au démarrage du contrôle.

Par exemple, ε1 peut être choisie égale à zéro (0) par défaut.

On notera également que le superviseur 58 peut être agencé pour arrêter le contrôle selon la loi prédéfinie avec un second décalage temporel ε2 fonction de la mesure de tension V2 à la troisième borne P2. Ce second décalage temporel ε2 est un retard temporel qui est la conséquence d'une demande de maintien de l'usage en mode linéaire des deux moyens d'interruption. Cette option est destinée à retarder de ε2 l'arrêt du contrôle selon la loi prédéfinie, afin d'atténuer l'effet inductif de l'architecture électrique et du générateur de courant par une réduction des pics de surtension et donc une réduction des perturbations électromagnétiques.

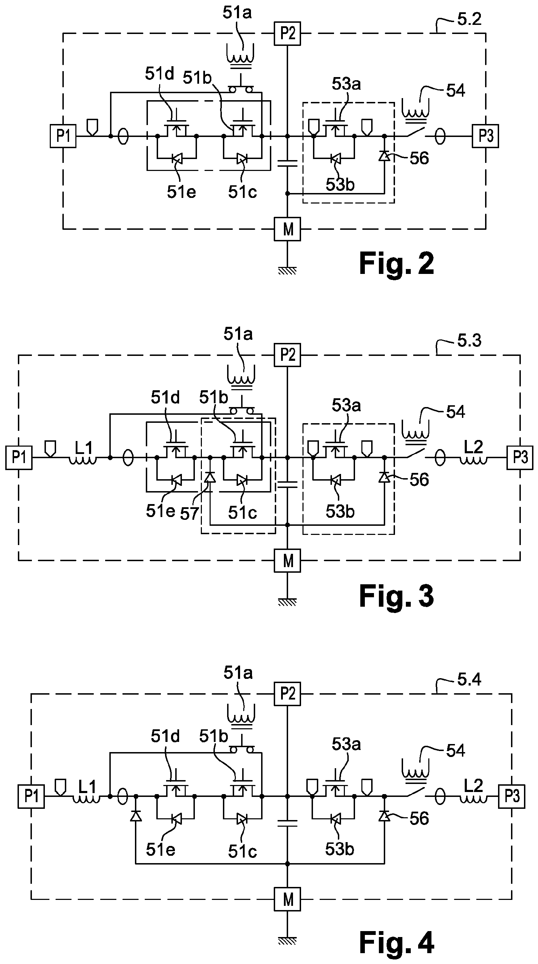

La figure 2 montre une deuxième variante de réalisation du dispositif de transfert d'énergie selon l'invention. Le dispositif 5.2 de la figure 2 comporte :
- le premier interrupteur élémentaire 51a,
- le premier ensemble d'interrupteur 51 comprenant, le deuxième interrupteur 51b, le quatrième interrupteur élémentaire 51d, la première diode 51c et la troisième diode 51e,
- le deuxième ensemble d'interrupteur 53 comprenant le troisième interrupteur élémentaire 53a, la deuxième diode 53b, la première diode de roue libre 56,
- l'interrupteur électromécanique 54.

Dans ce mode de réalisation, le troisième interrupteur 53a peut être piloté en PWM (commande piloté / mode automatique) dans le sens de l'ensemble comprenant le premier stockeur 3 et le générateur 1 vers le deuxième stockeur 6, de façon à limiter la recharge du premier stockeur 6. Le deuxième 51b et le quatrième 51d interrupteur peuvent être pilotés en PWM combiné à un mode linéaire lorsque, le troisième interrupteur 53a est piloté en PWM avec un passage du courant dans le sens premier stockeur 3 et le générateur 1 vers le deuxième stockeur 6, de façon à obtenir un filtrage actif.

La figure 3 montre une troisième variante de réalisation du dispositif de transfert d'énergie selon l'invention. Le dispositif 5.3 de la figure 3 comporte le même élément que le dispositif 5.2 de la deuxième variante ainsi que :
- une première inductance L1, reliée à la deuxième borne P1 et au premier interrupteur élémentaire 51a,
- une deuxième inductance L2, reliée à la quatrième borne P3 et à l'interrupteur électromécanique 54,
- une deuxième diode de roue libre 57 dont l'anode est reliée à la première borne (M) et la cathode est reliée à l'anode de la première diode (51c).

Dans ce mode de réalisation, le deuxième 51b interrupteur élémentaire peut en outre être piloté en PWM (commande piloté / mode automatique) dans le sens deuxième stockeur 6 vers premier stockeur 3 de façon à limiter la décharge du deuxième stockeur 6 vers le premier stockeur 3. La deuxième diode de roue libre 57 est nécessaire pour ce pilotage en PWM. Par contre les inductances L1, L2 ne sont pas indispensables.

La figure 4 montre une quatrième variante de réalisation du dispositif de transfert d'énergie selon l'invention. Le dispositif 5.4 de la figure 4 comporte les mêmes éléments que le dispositif 5.3 de la troisième variante. Cependant, le dispositif 5.4 de la quatrième variante diffère de celui 5.3 de la troisième variante en ce que la cathode de la deuxième diode de roue libre 57 est reliée à la cathode de la troisième diode 51e.

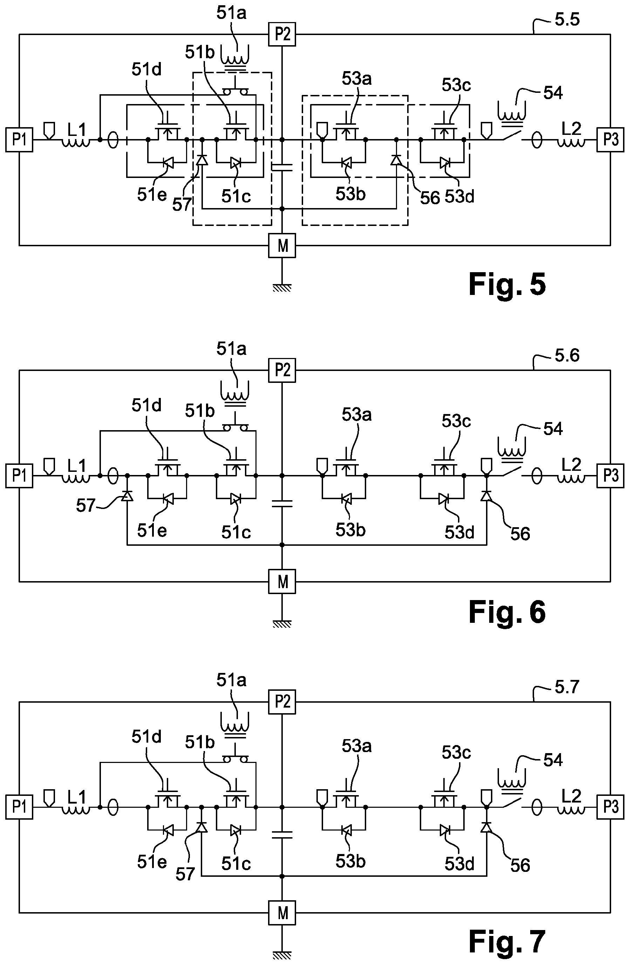

La figure 5 montre une cinquième variante de réalisation du dispositif de transfert d'énergie selon l'invention. Le dispositif 5.4 de la figure 4 comporte les mêmes éléments que le dispositif 5.3 de la troisième variante ainsi que le cinquième interrupteur élémentaire 53c, monté en parallèle de la quatrième diode 53d. Dans ce mode de réalisation, la cathode de la première diode de roue libre 56 est relié est reliée à l'anode de la deuxième diode 53b et la cathode de la deuxième diode roue libre 57 est relié à la cathode à l'anode de la première diode 51c.

Dans ce mode de réalisation, le cinquième interrupteur élémentaire 53c peut être piloté en PWM combiné à un mode linéaire pour réaliser un filtre actif lorsque le deuxième interrupteur 51b est en mode PWM avec un passage du courant dans le sens deuxième stockeur 6 vers le premier stockeur 3.

La figure 6 montre une sixième variante de réalisation du dispositif de transfert d'énergie selon l'invention. Le dispositif 5.6 de la figure 6 comporte les mêmes éléments que le dispositif 5.5 de la cinquième variante. Cependant, le dispositif 5.6 de la sixième variante diffère de celui 5.5 de la cinquième variante en ce que la cathode de la deuxième diode de roue libre 57 est reliée à la cathode de la troisième diode 51e et en ce que la cathode de la première diode de roue libre 56 est relié est reliée à la cathode de la quatrième diode 53d.

La figure 7 montre une septième variante de réalisation du dispositif de transfert d'énergie selon l'invention. Le dispositif 5.7 de la figure 7 comporte les mêmes éléments que le dispositif 5.5 de la cinquième variante. Cependant, le dispositif 5.7 de la septième variante diffère de celui 5.5 de la cinquième variante en ce que la cathode de la première diode de roue libre 56 est relié est reliée à la cathode de la quatrième diode 53d.

La figure 8 montre une huitième variante de réalisation du dispositif de transfert d'énergie selon l'invention. Le dispositif 5.8 de la figure 8 comporte les mêmes éléments que le dispositif 5.5 de la cinquième variante. Cependant, le dispositif 5.8 de la huitième variante diffère de celui 5.5 de la cinquième variante en ce que la cathode de la deuxième diode de roue libre 57 est reliée à la cathode de la troisième diode 51e.

## Revendications

1. Dispositif (5.1-5.8) de gestion de transfert d'énergie comportant une première borne (M) destinée à être reliée à une masse électrique, une deuxième borne (P1) destinée à être reliée à un premier stockeur (3) et à un producteur d'énergie (1), une troisième borne (P2) destinée à être reliée à au moins un consommateur électrique, une quatrième borne (P3) destinée à être reliée à un deuxième stockeur (6) d'énergie électrique, ledit dispositif (5.1-5.8) comprenant en outre un premier ensemble d'interrupteurs (51) couplé d'une part à la deuxième borne (P1) et d'autre part à la troisième borne (P2), un deuxième ensemble d'interrupteurs (53) couplé d'une part à la quatrième borne (P3) et d'autre part à la troisième borne (P2), le premier ensemble d'interrupteurs (51) comportant une première diode (51c) dont la cathode est reliée à la troisième borne (P2) et un deuxième interrupteur élémentaire (51b) monté en parallèle de la première diode (51c), le deuxième ensemble d'interrupteurs (53) comportant une deuxième diode (53b) dont la cathode est reliée à la troisième borne (P2), **caractérisé en ce que** le premier ensemble d'interrupteurs (51) comporte en outre :
- une première diode de roue libre (56) dont l'anode est reliée à la première borne (M) et dont la cathode est couplée à l'anode de la deuxième diode (53b),
- une troisième diode (51e) dont l'anode est reliée à l'anode de la première diode (51c), et
- un interrupteur élémentaire (51d), dit quatrième interrupteur élémentaire, monté en parallèle de la troisième diode (51e).
et **en ce que**, ledit troisième interrupteur élémentaire (53a) étant adapté pour être piloté par un signal en modulation de largeur d'impulsions, lesdits deuxième interrupteur élémentaire (51b) et quatrième interrupteur élémentaire (51d) étant à au moins trois états, dont au moins un état intermédiaire partiellement passant, un état ouvert et un état fermé, et étant adaptés pour être pilotés par un signal en modulation de largeur d'impulsions, il comporte en outre un superviseur (58) apte à délivrer :
- un signal modulé au troisième interrupteur élémentaire (53a) de façon à limiter le courant transitant par ledit troisième interrupteur élémentaire (53a), et
- un signal modulé au deuxième interrupteur élémentaire (51b) et au quatrième interrupteur élémentaire (51d) de façon à contrôler le placement desdits interrupteurs élémentaires (51b, 51d) dans un état intermédiaire de sorte à limiter des variations de tensions, au niveau de la troisième borne (P2), lorsque le troisième interrupteur élémentaire (53a) est piloté par un signal modulé.

2. Dispositif (5.1-5.8) de gestion de transfert d'énergie selon la revendication 1, **caractérisé en ce que**, lors d'un transfert d'énergie de la deuxième borne (P1) vers la quatrième borne (P3), le signal modulé commande le deuxième interrupteur élémentaire (51b) et le quatrième interrupteur élémentaire (51d) de sorte que :
- le deuxième interrupteur élémentaire (51b) et le quatrième interrupteur élémentaire (51d) sont dans l'état intermédiaire, si la tension au niveau de la troisième borne (P2) est supérieure à un seuil prédéterminé lorsque le troisième interrupteur élémentaire (53a) est dans un état ouvert au cours du pilotage par le signal modulé, le deuxième interrupteur élémentaire (51b) et le quatrième interrupteur élémentaire (51d) étant dans l'état fermé si la tension au niveau de la troisième borne (P2) est inférieure au seuil prédéterminé et
- le deuxième interrupteur élémentaire (51b) et le quatrième interrupteur élémentaire (51d) sont dans un état fermé lorsque le troisième interrupteur élémentaire (53a) est dans un état fermé.

3. Dispositif (5.2-5.8) de gestion de transfert d'énergie selon l'une des revendication 1 à 2, **caractérisé en ce qu'**il comporte en outre une deuxième diode de roue libre (57) dont l'anode est reliée à la première borne (M) et la cathode est reliée à l'anode de la première diode (51 c) ou à la cathode de la troisième diode (51e), le superviseur (58) étant, en outre, apte à délivrer un signal modulé au deuxième interrupteur élémentaire (51b) de façon à limiter le courant transitant par ledit deuxième interrupteur élémentaire (51b), lors d'un transfert d'énergie de la quatrième borne (P3) vers la troisième borne (P2).

4. Dispositif (5.4-5.8) de gestion de transfert d'énergie selon la revendication précédente, **caractérisé en ce que** le deuxième ensemble d'interrupteurs (53) comporte en outre :
- une quatrième diode (53d) dont l'anode est reliée à l'anode de la deuxième diode (53b),
- un cinquième interrupteur élémentaire (53c), monté en parallèle de la quatrième diode (53d).

5. Dispositif (5.4-5.8) de gestion de transfert d'énergie selon la revendication précédente, **caractérisé en ce que**, les troisième interrupteur élémentaire (53a) et cinquième interrupteur élémentaire (53c) étant à au moins trois états, dont au moins un état intermédiaire partiellement passant, un état passant et un état non passant, le superviseur (58) étant, en outre, apte à délivrer un signal modulé de sorte que :
- le courant transitant par ledit deuxième interrupteur élémentaire (51b) est limité,
- le troisième interrupteur élémentaire (53a) et le cinquième interrupteur élémentaire (53c) sont dans l'état intermédiaire si la tension au niveau de la troisième borne (P2) est supérieure à un seuil prédéterminée lorsque le premier interrupteur élémentaire (51b) est dans un état ouvert au cours du pilotage par le signal modulé, le troisième interrupteur élémentaire (53a) et le cinquième interrupteur élémentaire (53c) étant dans l'état fermé si la tension au niveau de la troisième borne (P2) est inférieure au seuil prédéterminé et
- le troisième interrupteur élémentaire (53a) et le cinquième interrupteur élémentaire (53c) sont dans un état fermé lorsque le premier interrupteur élémentaire (51b) est dans un état fermé.

6. Dispositif (5.4-5.8) de gestion de transfert d'énergie selon la revendication précédente **caractérisé en ce que** la cathode de la première diode de roue libre (56) est reliée à l'anode de la deuxième diode (53b) ou à la cathode de la quatrième diode (53d).

7. Système électrique d'un véhicule comportant un producteur d'énergie (1) un premier stockeur d'énergie (3), un deuxième stockeur d'énergie (6) et un réseau de bord principal (4a) comportant au moins un consommateur électrique **caractérisé en ce qu'**il comporte en outre un dispositif (5.1-5.8) de gestion de transfert d'énergie selon l'une des revendications précédentes, la deuxième borne (P1) étant reliée au premier stockeur (3) et au producteur d'énergie (1), la troisième borne (P2) étant reliée au réseau de bord (4a), la quatrième borne (P3) étant reliée au deuxième stockeur (6), la première borne (M) étant relié à une masse électrique du véhicule.

8. Véhicule comportant un dispositif (5.1-5.8) de gestion de transfert d'énergie selon l'une des revendications 1 à 6 ou un système électrique selon la revendication 7.

## Patentansprüche

1. Vorrichtung (5.1 bis 5.8) zur Energieübertragungssteuerung, die eine erste Klemme (M) umfasst, die dazu bestimmt ist, an eine elektrische Masse gelegt zu sein, eine zweite Klemme (P1), die dazu bestimmt ist, mit einem ersten Speicher (3) und einem Energieerzeuger (1) verbunden zu sein, eine dritte Klemme (P2), die dazu bestimmt ist, mit mindestens einem Stromverbraucher verbunden zu sein, eine vierte Klemme (P3), die dazu bestimmt ist, mit einem zweiten Stromspeicher (6) verbunden zu sein, wobei die Vorrichtung (5.1 bis 5.8) außerdem eine erste Einheit von Schaltern (51) umfasst, die einerseits mit der zweiten Klemme (P1) und andererseits mit der dritten Klemme (P2) gekoppelt ist, eine zweite Einheit von Schaltern (53), die einerseits mit der vierten Klemme (P3) und andererseits mit der dritten Klemme (P2) gekoppelt ist, wobei die erste Einheit von Schaltern (51) eine erste Diode (51c) umfasst, deren Kathode mit der dritten Klemme (P2) verbunden ist, und einen zweiten elementaren Schalter (51b), der mit der ersten Diode (51c) parallel geschaltet ist, wobei die zweite Einheit von Schaltern (53) eine zweite Diode (53b) umfasst, deren Kathode mit der dritten Klemme (P2) verbunden ist, **dadurch gekennzeichnet, dass** die erste Einheit von Schaltern (51) außerdem Folgendes umfasst:
- eine erste Freilaufdiode (56), deren Anode mit der ersten Klemme (M) verbunden ist, und deren Kathode mit der Anode der zweiten Diode (53b) gekoppelt ist,
- eine dritte Diode (51e), deren Anode mit der Anode der ersten Diode (51c) verbunden ist, und
- einen elementaren Schalter (51d), vierter elementarer Schalter genannt, der zu der dritten Diode (51e) parallel geschaltet ist,
und dass der dritte elementare Schalter (53a) angepasst ist, um von einem Pulsbreitenmodulationssignal gesteuert zu sein, wobei der zweite elementare Schalter (51b) und der vierte elementare Schalter (51d) mindestens drei Zustände besitzen, darunter mindestens ein teilweise durchlässiger Zwischenzustand, ein offener Zustand und ein geschlossener Zustand, und da sie angepasst sind, um von einem Pulsbreitenmodulationssignal gesteuert zu sein, er außerdem einen Supervisor (58) umfasst, der geeignet ist, Folgendes zu liefern:
- ein moduliertes Signal zu dem dritten elementaren Schalter (53a) derart, dass der Strom, der durch den dritten elementaren Schalter (53a) durchgeht, eingeschränkt ist, und
- ein modulierte Signal zu dem zweiten elementaren Schalter (51b) und zu dem vierten elementaren Schalter (51d) derart, dass das Stellen der elementaren Schalter (51b, 51d) auf einen Zwischenzustand derart gesteuert wird, dass Spannungsvariationen in dem Bereich der dritten Klemme (P2) eingeschränkt sind, wenn der dritte elementare Schalter (53a) von einem modulierten Signal gesteuert wird.

2. Energieübertragungssteuerungsvorrichtung (5.1 bis 5.8) nach Anspruch 1, **dadurch gekennzeichnet, dass** bei einer Energieübertragung von der zweiten Klemme (P1) zu der vierten Klemme (P3) das modulierte Signal den zweiten elementaren Schalter (51b) und den vierten elementaren Schalter (51d) derart steuert, dass:
- der zweite elementare Schalter (51b) und der vierte elementare Schalter (51d) in einem Zwischenzustand sind, falls die Spannung in dem Bereich der dritten Klemme (P2) größer ist als ein vorbestimmter Schwellenwert, wenn sich der dritte elementare Schalter (53a) im Laufe des Steuerns durch das modulierte Signal in einem offenen Zustand befindet, wobei der zweite elementare Schalter (51b) und der vierte elementare Schalter (51d) in einem geschlossenen Zustand sind, falls die Spannung in dem Bereich der dritten Klemme (P2) kleiner ist als der vorbestimmte Schwellenwert, und
- der zweite elementare Schalter (51b) und der vierte elementare Schalter (51d) in einem geschlossenen Zustand sind, wenn der dritte elementare Schalter (53a) in einem geschlossenen Zustand ist.

3. Energieübertragungssteuerungsvorrichtung (5.2 bis 5.8) nach einem der Ansprüche 1 bis 2, **dadurch gekennzeichnet, dass** sie außerdem eine zweite Freilaufdiode (57) umfasst, deren Anode mit der ersten Klemme (M) verbunden ist, und deren Kathode mit der Anode der ersten Diode (51c) oder mit der Kathode der dritten Diode (51e) verbunden ist, wobei der Supervisor (58) außerdem geeignet ist, ein moduliertes Signal zu dem zweiten elementaren Schalter (51b) derart zu liefern, dass der Strom, der durch den zweiten elementaren Schalter (51b) bei einer Energieübertragung von der vierten Klemme (P3) zu der dritten Klemme (P2)durchgeht, eingeschränkt ist.

4. Energieübertragungssteuerungsvorrichtung (5.4 bis 5.8) nach dem vorstehenden Anspruch, **dadurch gekennzeichnet, dass** die zweite Einheit von Schaltern (53) außerdem Folgendes umfasst:
- eine vierte Diode (52d), deren Anode mit der Anode der zweiten Diode (53b) verbunden ist, und
- einen fünften elementaren Schalter (53c), der zu der vierten Diode (53d) parallel geschaltet ist.

5. Energieübertragungssteuerungsvorrichtung (5.4 bis 5.8) nach dem vorstehenden Anspruch, **dadurch gekennzeichnet, dass** der dritte elementare Schalter (53a) und der fünfte elementare Schalter (53c) mindestens drei Zustände aufweisen, darunter mindestens ein teilweise durchlässiger Zwischenzustand, ein durchlässiger Zustand und ein nicht durchlässiger Zustand, wobei der Supervisor (58) außerdem geeignet ist, ein moduliertes Signal derart zu liefern, dass
- der Strom, der durch den zweiten elementaren Schalter (51b) durchgeht, eingeschränkt ist,
- der dritte elementare Schalter (53a) und der fünfte elementare Schalter (53c) in dem Zwischenzustand sind, falls die Spannung in dem Bereich der dritten Klemme (P2) größer ist als ein vorbestimmter Schwellenwert, wenn sich der erste elementare Schalter (51b) im Laufe des Steuerns durch das modulierte Signal in einem offenen Zustand befindet, der dritte elementare Schalter (53a) und der fünfte elementare Schalter (53c) in einem geschlossenen Zustand sind, falls die Spannung in dem Bereich der dritten Klemme (P2) kleiner ist als der vorbestimmte Schwellenwert, und
- der dritte elementare Schalter (53a) und der fünfte elementare Schalter (53c) in einem geschlossenen Zustand sind, wenn der erste elementare Schalter (51b) in einem geschlossenen Zustand ist.

6. Energieübertragungssteuerungsvorrichtung (5.4 bis 5.8) nach dem vorstehenden Anspruch, **dadurch gekennzeichnet, dass** die Kathode der ersten Freilaufdiode (56) mit der Anode der zweiten Diode (53b) oder mit der Kathode der vierten Diode (53d) verbunden ist.

7. Elektrisches System eines Fahrzeugs, das einen Energieerzeuger (1) und einen ersten Energiespeicher (3), einen zweiten Energiespeicher (6) und ein Hauptbordnetzwerk (4a) umfasst, das mindestens einen Stromverbraucher umfasst, **dadurch gekennzeichnet, dass** es außerdem eine Energieübertragungssteuerungsvorrichtung (5.1 bis 5.8) nach einem der vorstehenden Ansprüche umfasst, wobei die zweite Klemme (P1) mit dem ersten Speicher (3) und mit dem Energieerzeuger (1) verbunden ist, die dritte Klemme (P2) mit dem Bordnetzwerk (4a) verbunden ist, die vierte Klemme (P3) mit dem zweiten Speicher (6) verbunden ist, die erste Klemme (M) an eine elektrische Masse des Fahrzeugs gelegt ist.

8. Fahrzeug, das eine Energieübertragungssteuerungsvorrichtung (5.1 bis 5.8) nach einem der Ansprüche 1 bis 6 oder ein elektrisches System nach Anspruch 7 umfasst.

## Claims

1. An energy transfer control device (5.1-5.8) comprising a first terminal (M) intended to be connected to an electrical ground, second terminal (P1) intended to be connected to a first store (3) and to a producer of energy (1), a third terminal (P2) intended to be connected to at least one electrical consumer, and a fourth terminal (P3) intended to be connected to a second store (6) of electrical energy, said device (5.1-5.8) further including a first set of switches (51) coupled on the one hand to the second terminal (P1) and on the other hand to the third terminal (P2), a second set of switches (53) coupled on the one hand to the fourth terminal (P3) and on the other hand to the third terminal (P2), the first set of switches (51) comprising a first diode (51c), the cathode of which is connected to the third terminal (P2) and a second basic switch (51b) mounted in parallel with the first diode (51c), the second set of switches (53) comprising a second diode (53b), the cathode of which is connected to the third terminal (P2), **characterized in that** the first set of switches (51) further comprises:
- a first freewheeling diode (56), the anode of which is connected to the first terminal (M) and the cathode of which is coupled to the anode of the second diode (53b),
- a third diode (51e), the anode of which is connected to the anode of the first diode (51c), and
- a basic switch (51d), designated as fourth basic switch, mounted in parallel with the third diode (51e),
and **in that**, said third basic switch (53a) being adapted to be driven by a pulse width modulation signal, said second basic switch (51b) and fourth basic switch (51d) being with at least three states, including at least one partially on intermediate state, an open state and a closed state, and being adapted to be driven by a pulse width modulation signal, it further comprises a supervisor (58) able to deliver:
- a modulated signal at the third basic switch (53a) so as to limit the current passing through said third basic switch (53a), and
- a modulated signal at the second basic switch (51b) and at the fourth basic switch (51d) so as to control the placement of said basic switches (51b, 51d) in an intermediate state so as to limit variations of voltages, at the level of the third terminal (P2), when the third basic switch (53a) is driven by a modulated signal.

2. The energy transfer control device (5.1-5.8) according to Claim 1, **characterized in that**, during a transfer of energy from the second terminal (P1) to the fourth terminal (P3), the modulated signal controls the second basic switch (51b) and the fourth basic switch (51d) so that:
- the second basic switch (51b) and the fourth basic switch (51d) are in the intermediate state, if the voltage at the level of the third terminal (P2) is greater than a predetermined threshold when the third basic switch (53a) is in an open state during the driving by the modulated signal, the second basic switch (51b) and the fourth basic switch (51d) being in the closed state if the voltage at the level of the third terminal (P2) is less than the predetermined threshold and
- the second basic switch (51b) and the fourth basic switch (51d) are in a closed state when the third basic switch (53a) is in a closed state.

3. The energy transfer control device (5.2-5.8) according to one of Claims 1 to 2, **characterized in that** it further comprises a second freewheeling diode (57), the anode of which is connected to the first terminal (M) and the cathode is connected to the anode of the first diode (51c) or to the cathode of the third diode (51e), the supervisor (58) being, furthermore, able to be deliver a modulated signal at the second basic switch (51b) so as to limit the current passing through said second basic switch (51b), during a transfer of energy from the fourth terminal (P3) to the third terminal (P2).

4. The energy transfer control device (5.4-5.8) according to the preceding claim, **characterized in that** the second set of switches (53) further comprises:
- a fourth diode (53d), the anode of which is connected to the anode of the second diode (53b),
- a fifth basic switch (53c), mounted in parallel with the fourth diode (53d).

5. The energy transfer control device (5.4-5.8) according to the preceding claim, **characterized in that**, the third basic switch (53a) and fifth basic switch (53c) being with at least three states, including at least one partially on intermediate state, an on state and a non-on state, the supervisor (58) being, furthermore, able to delivery a modulated signal so that:
- the current passing through said second basic switch (51b) is limited,
- the third basic switch (53a) and the fifth basic switch (53c) are in the intermediate state if the voltage at the level of the third terminal (P2) is greater than a predetermined threshold when the first basic switch (51b) is in an open state during the driving by the modulated signal, the third basic switch (53a) and the fifth basic switch (53c) being in the closed state if the voltage at the level of the third terminal (P2) is less than the predetermined threshold and
- the third basic switch (53a) and the fifth basic switch (53c) are in a closed state when the first basic switch (51b) is in a closed state.

6. The energy transfer control device (5.4-5.8) according to the preceding claim, **characterized in that** the cathode of the first freewheeling diode (56) is connected to the anode of the second diode (53b) or to the cathode of the fourth diode (53d).

7. An electrical system of a vehicle comprising a producer of energy (1), a first store of energy (3), a second store of energy (6) and a main on-board network (4a) comprising at least one electrical consumer, **characterized in that** it further comprises an energy transfer control device (5.1-5.8) according to one of the preceding claims, the second terminal (P1) being connected to the first store (3) and to the producer of energy (1), the third terminal (P2) being connected to the on-board network (4a), the fourth terminal (P3) being connected to the second store (6), the first terminal (M) being connected to an electrical ground of the vehicle.

8. A vehicle comprising an energy transfer control device (5.1-5.8) according to one of Claims 1 to 6 or an electrical system according to Claim 7.
